(19) Europäisches Patentamt / European Patent Office / Office européen des brevets

(11) **EP 3 039 398 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***G01M 17/007*** *(2006.01)* ***G01M 17/06*** *(2006.01)*

(21) Anmeldenummer: **14758363.7**

(22) Anmeldetag: **29.08.2014**

(86) Internationale Anmeldenummer:
**PCT/EP2014/068332**

(87) Internationale Veröffentlichungsnummer:
**WO 2015/028585 (05.03.2015 Gazette 2015/09)**

(54) **VERFAHREN ZUR SIMULATION VON KURVENFAHRTEN**

METHOD FOR THE SIMULATION OF CORNERING

PROCÉDÉ DE SIMULATION DE NÉGOCIATION DE VIRAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2013 AT 505322013**

(43) Veröffentlichungstag der Anmeldung:
**06.07.2016 Patentblatt 2016/27**

(73) Patentinhaber: **AVL List GmbH**
**8020 Graz (AT)**

(72) Erfinder:
• **DÜSER, Tobias**
**64625 Bensheim (DE)**
• **HETTEL, Rolf**
**76137 Karlsruhe (DE)**

(74) Vertreter: **Patentanwälte Pinter & Weiss OG**
**Prinz-Eugen-Straße 70**
**1040 Wien (AT)**

(56) Entgegenhaltungen:
**US-A1- 2013 060 500**

• **Christian Beidl ET AL: "REALER KRAFTSTOFFVERBRAUCH UNDMANÖVERBASIERTES TESTEN", ATZ - Automobiltechnische Zeitschrift, 1. April 2013 (2013-04-01), Seiten 290-295, XP055152355, Gefunden im Internet: URL:http://download.springer.com/static/pd f/911/art%3A10.1007%2Fs35148-013-0086-3.pd f?auth66=1415870322_83ce639c21ab31bdff8238 9d241e75b7&ext=.pdf [gefunden am 2014-11-11]**
• **TÜV Hessen: "TÜV Hessen Rollenprüfstand advanced im Technologie- und Umweltzentrum in Pfungstadt", , 28. November 2012 (2012-11-28), XP054975604, Gefunden im Internet: URL:http://www.youtube.com/watch?feature=p layer_embedded&v=jk2cmRbO2ws [gefunden am 2014-11-11]**
• **Tobias Düser ET AL: "ROLLENPRÜFSTÄNDE FÜR FAHRZEUG- UND ANTRIEBSKONZEPTE VON MORGEN", , 1. April 2012 (2012-04-01), XP055152622, Gefunden im Internet: URL:http://download.springer.com/static/pd f/261/art%3A10.1007%2Fs35148-012-0332-0.pd f?auth66=1415974965_019aecf18a06e0d54ca59 a24ba9f7753&ext=.pdf [gefunden am 2014-11-12]**

**Beschreibung**

Die Erfindung betrifft ein Verfahren zur Simulation von Kurvenfahrten eines, zur Ermittlung einer Messgröße, zu prüfenden Fahrzeuges auf einem Rollenprüfstand.

Für viele Untersuchungen auf dem Fahrzeug-Rollenprüfstand ist es entscheidend, möglichst realistisch die Fahrzeuglängsdynamik nachzubilden. Dazu gehört das richtige Ansprechverhalten beim Beschleunigen des Fahrzeugs, der Beschleunigungsverlauf, Widerstände und Schwingungsverhalten in konstanten Betriebspunkten, sowie Ausroll- bzw. Widerstandsverhalten beim Verzögern. Das Ausroll- und Beschleunigungsverhalten beeinflusst beispielsweise den auf dem Prüfstand gemessenen Kraftstoffverbrauch und die damit verbundenen Emissionen stark. Wie beispielsweise durch die SAE J2264 (SAE International: Chassis Dynamometre Simulation of Roads Load Using Coastdown Techniques, Recomendet Practice, 1995) vorgeschrieben, wird am Prüfstand das Ausrollverhalten, zumeist mittels eines auf der Straße gemessenen Ausrollverhaltens, nachgebildet.

Entscheidend ist dabei, dass die Umgebungseinflüsse, die sich beim Wechsel von der Straße auf den Prüfstand ändern, entsprechend berücksichtigt und nachgebildet werden. Je nach Untersuchungsziel sind unterschiedliche Einflüsse wichtiger als andere und müssen deshalb genauer betrachtet werden.

Eine Variante das Testen eines Fahrzeuges auf einem Rollenprüfstand den realistischen Umständen noch besser annähern zu können zeigt beispielsweise die US 2013/0060500 A1. Als mögliche Einflussfaktoren der Umgebung werden dabei insbesondere Änderungen der Lufttemperatur und des Luftdrucks berücksichtigt. Es wird angeführt, dass sich aufgrund des geringeren Luftdrucks in großen Höhenlagen der Fahrwiderstand auf ein Fahrzeug entsprechend verringert. In diesem Zusammenhang wird der Widerstand, den die Rollen den Rädern des zu prüfenden Fahrzeuges entgegensetzen, abhängig von den genannten Faktoren angepasst um auch in der Prüfsituation auf einem Rollenprüfstand den Fahrwiderstand möglichst realitätsnah auf das zu prüfende Fahrzeug aufbringen zu können.

Ein wesentlicher Punkt, der jedoch unbeachtet bleibt, sind dynamische Effekte wie sie beispielsweise bei der Fahrt durch Kurven auftreten und deren Einfluss auf den Rollwiderstand und den damit verbundenen Kraftstoffverbrauch.

Durch möglicherweise auftretenden seitlichen Schlupf an den Reifen, Verluste im Differential und Verluste durch bei Kurvenfahrt zusätzlich angetriebene Nebenaggregate, wie beispielsweise Lenkkraftverstärker oder ähnliches, wirken Widerstandskräfte welche die Fahrwiderstände entsprechend erhöhen.

Da das Lenken auf herkömmlichen Rollenprüfständen aufgrund der starren Ausrichtung der Rollenrotationsachse nicht sinnvoll ist, wird dort der Ansatz verfolgt dieses Kurvenverhalten durch das Stellen radindividueller Drehzahlen links und rechts, abzubilden. Die Rotationsachse des Rades bleibt dabei ständig parallel zu der der Rolle. Dafür wird jedoch, beispielsweise für vierrädrige Fahrzeuge, ein Prüfstand mit vier einzeln getriebenen Rollen, üblicherweise als 4x4 Rollenprüfstand bezeichnet, genutzt. Zur Ansteuerung der einzelnen Rollen, kommt dabei üblicherweise ein entsprechend komplexes Simulationsmodell zur Anwendung.

Der Artikel "Realer Kraftstoffverbrauch und manöverbasiertes Testen", ATZ-Automobiltechnische Zeitschrift, April 2013, Seiten 290-295, offenbart die Verwendung eines 4x4 Rollenprüfstandes, unter anderem zur Simulation von Kurvenfahrten. Dabei erfolgt das Abbilden der realen Straßenfahrt durch unterschiedliche Raddrehzahl und Raddrehmoment an jedem einzelnen Rad.

Das aus dem Internet unter der URL https://www.youtube.com/watch?feature=player_embedded&v=jk2cmRb02ws abgerufene Video "TÜV Hessen Rollenprüfstand advanced im Technologie- und Umweltzentrum in Pfungstadt" zeigt den Betrieb des 4x4-Rollenprüfstands des Technologie- und Umweltzentrums in Pfungstadt.

Der Artikel "Rollenprüfstände für Fahrzeuge und Antriebskonzepte von morgen", ATZ, April 2012 offenbart Verfahren zur Durchführung von manöverbasierten und modellbasierten Tests auf einem Rollenprüfstand. Insbesondere bei Elektro- oder Hybridfahrzeugen werden dabei der Energieverbrauch von Nebenaggregaten, wie beispielsweise eine elektrische Lenkunterstützung, berücksichtigt.

Die Nutzung von vier einzeln getriebenen Rollen ist insbesondere dann notwendig, wenn das Untersuchungsziel von den unterschiedlichen Raddrehzahlen abhängt, was zum Beispiel bei der Vermessung des Differentials, Analyse und Optimierung von ABS und ESP, sowie modernen Antriebskonzepten mit Torque Vectoring der Fall ist.

In den meisten Fällen stehen andere Untersuchungsziele im Vordergrund, wie beispielsweise Kraftstoffverbrauch, Abgaszertifizierung oder Leistungsverhalten. Da diese Messungen aber nicht von den einzelnen Raddrehzahlen und Radmomenten, sondern von den zentralen Antriebsstrangdrehzahlen und -momenten abhängen, kann das Verhalten auch ohne radindividuelle Ansteuerung untersucht werden. Für solche Anwendungsfälle reicht also ein üblicherweise als 4x2 Rollenprüfstand bezeichneter Prüfstand aus, bei dem beide Vorderräder auf einer gemeinsamen und beide Hinterräder auf einer gemeinsamen Rolle stehen beziehungsweise eine nochmals vereinfachte Version welche als 2x1 Rollenprüfstand bezeichnet wird, bei welchem lediglich eine Rolle den Antriebsrädern zugeordnet ist. Dadurch, dass bei solchen, im Vergleich zu einem 4x4 Rollenprüfstand, reduzierten Prüfständen der technische und somit auch finanzielle Aufwand für die Errichtung erheblich geringer ist, stehen in den meisten Fällen lediglich die erwähnten 4x2 beziehungsweise 2x1 Rollenprüfstände zur Verfügung.

Nachteilig ist dabei zu sehen, dass die oben erwähnten Effekte die sich bei Kurvenfahrt ergeben nicht berücksichtigt werden können, da sich das kurveninnere und das kurvenäußere Rad auf einer gemeinsamen Rolle befinden.

Die Aufgabe der gegenständlichen Erfindung besteht darin, im Zuge der Untersuchung eines zu prüfenden Fahrzeuges auf einem Rollenprüfstand, das Berücksichtigen der zusätzlich wirkenden Widerstände, wie sie bei der Fahrt durch Kurven auftreten, zu ermöglichen ohne einen Rollenprüfstand der eine radindividuelle Regelung der Drehzahl erlaubt zwingend vorauszusetzen.

Diese Aufgabe wird erfindungsgemäß dadurch gelöst, dass das zu prüfende Fahrzeug am Rollenprüfstand entsprechend einer Geradeausfahrt betrieben wird und dass zur Simulation von Kurvenfahrten die dabei zusätzlich wirkenden Widerstandskräfte in Form einer Korrekturgröße berücksichtigt werden.

Dies erlaubt Rollenprüfstandsbetreibern die einen bestehenden 4x2 oder 2x1 Rollenprüfstand nutzen, die Übertragung der Fahrwiderstände wie sie in der Realität bei Kurvenfahrt wirken. Bei Anwendung auf einem 4x4 Rollenprüfstand kann auf das üblicherweise notwendige komplexe Simulationsmodell verzichtet werden, wodurch sich der Regelungsaufwand deutlich reduziert. Dadurch, dass die Korrekturgröße lediglich die bei Kurvenfahrt zusätzlich wirkenden Widerstandskräfte berücksichtigt, stellt das vorgestellte Verfahren eine Erweiterung beziehungsweise eine Vereinfachung für die auf Rollenprüfständen üblich angewandten Verfahren dar. Das Verfahren kann selbstverständlich auch Anwendung für Rollenprüfstände finden, welche für zu prüfende Fahrzeuge mit mehr oder weniger als vier Rädern vorgesehen sind.

Eine Weiterbildung der Erfindung sieht vor, dass als Korrekturgröße eine Summenwiderstandskraft verwendet wird, welche durch summieren der bei Kurvenfahrt zusätzlich wirkenden Widerstandskräfte gebildet wird und welche am Rollenprüfstand in Form eines veränderten Widerstands, welchen der Rollenprüfstand auf das zu prüfende Fahrzeug ausübt, berücksichtigt wird.

Dadurch, dass sämtliche bei Kurvenfahrt zusätzlich wirkenden Widerstandskräfte, wie beispielsweise Schlupf an den Reifen, Verluste im Differential, Verluste durch bei Kurvenfahrt zusätzlich angetriebene Nebenaggregate, etc., zu einer einzigen Summenwiderstandskraft zusammengefasst werden, können die Einflüsse durch die Kurvenfahrt bei der Untersuchung eines zu prüfenden Fahrzeugs auf dem Fahrzeug-Rollenprüfstand einfach berücksichtigt werden indem zur üblichen Widerstandskraft, welche sich bei der Geradeausfahrt ergibt, besagte Summenwiderstandskraft hinzu addiert wird.

Eine andere Ausgestaltung der Erfindung besteht darin, dass als Korrekturgröße ein rechnerischer Korrekturfaktor verwendet wird, mittels welchem die ermittelte Messgröße korrigiert wird.

Stellt beispielsweise der Kraftstoffverbrauch die zu ermittelnde Messgröße dar, kann sich die Korrekturgröße auf den erhöhten Treibstoffverbrauch, welcher sich durch Kurvenfahrt ergibt, beziehen. Je nach simulierter Art und Anzahl der gefahrenen Kurven kann die Höhe eines entsprechenden Korrekturfaktors bestimmt werden, welcher bei der Auswertung auf das Messergebnis, im erwähnten Fall den Treibstoffverbrauch, rechnerisch beispielsweise durch einfache Addition, angewendet wird.

Eine weitere vorteilhafte Ausgestaltung der Erfindung sieht vor, dass ein, die Korrekturgröße beschreibendes Kennfeld durch reale Ausrollversuche des zu prüfenden Fahrzeuges in Kurven mit unterschiedlichen Radien erstellt wird.

Wird die Korrekturgröße, beziehungsweise das zugehörige, beschreibende Kennfeld durch reale Versuche erstellt, werden auch alle in der Realität auftretenden Widerstände wie beispielsweise die bereits erwähnten Verluste im Differenzial und andere, zwangsläufig mit einbezogen wodurch ein Optimum an Realitätsnähe erreicht wird.

Eine weitere vorteilhafte Ausgestaltung der Erfindung besteht darin, dass die Korrekturgröße unter Verwendung physikalischer Modelle berechnet wird.

Dies erlaubt die Berücksichtigung unterschiedlicher sich bei Kurvenfahrt ergebender Widerstände, ohne dafür die erwähnten realen Ausrollversuche durchführen zu müssen. Die Nutzung physikalischer Modelle erlaubt dabei eine beliebig feine Abstufung von Kurvenradien und Fahrgeschwindigkeiten. Weiters können je nach bestehenden Erfordernissen, beispielsweise in Bezug auf Rechenzeit oder Anzahl an berücksichtigten Einflussgrößen, unterschiedliche physikalische Modelle zur Anwendung kommen, wobei naturgemäß mit steigender Komplexität des physikalischen Modells und steigender Anzahl der berücksichtigten Einflussgrößen eine bessere Annäherung an die Realität gegeben ist.

Eine weitere Ausgestaltung der Erfindung sieht vor, dass durch ein physikalisches Modell Widerstandskräfte hervorgerufen durch die auf die Reifen und das Fahrwerk des zu prüfenden Fahrzeuges wirkenden Kräfte berücksichtigt werden.

In analoger Weise sehen weitere vorteilhafte Ausgestaltungen der Erfindung vor, dass durch ein physikalisches Modell Widerstandskräfte hervorgerufen durch Verluste im Antriebsstrang des zu prüfenden Fahrzeuges und/oder Widerstandskräfte welche durch lenkungsabhängige Nebenaggregate des zu prüfenden Fahrzeuges hervorgerufen werden berücksichtigt werden.

Die getrennte Berücksichtigung unterschiedlicher Quellen für mögliche Widerstandskräfte erlaubt es das physikalische Modell je nach Bedarf anzupassen.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt

Fig.1 ein zu prüfendes Fahrzeug auf einem Rollenprüfstand,

Fig.2 ein Kennfeld für den Kurvenwiderstand in Abhängigkeit von Geschwindigkeit und Kurvenradius,

Fig.3 ein Schema zur direkten Korrektur der Messgröße.

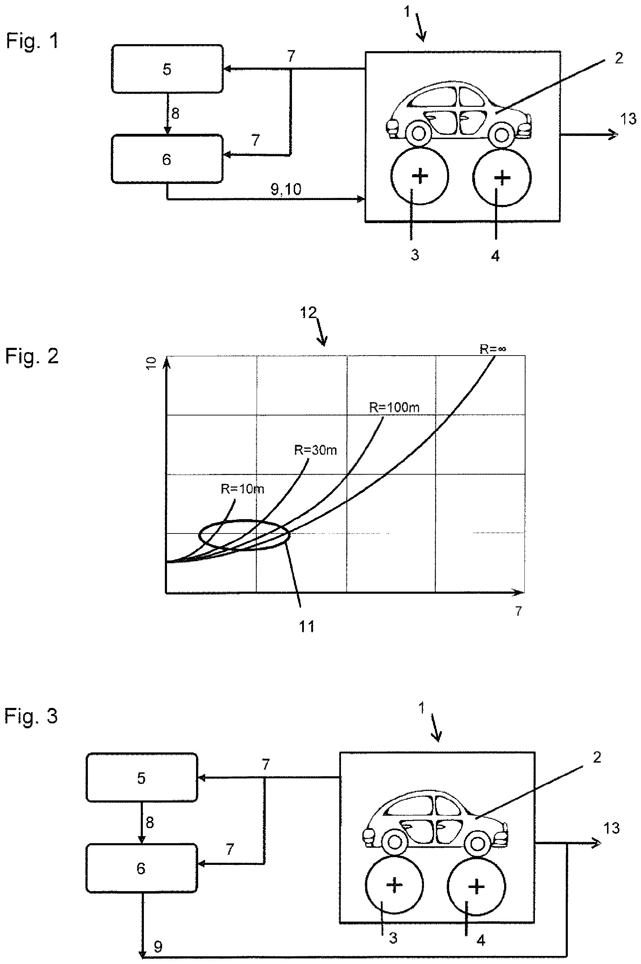

Figur 1 zeigt eine typische Anordnung eines zu prüfenden Fahrzeuges 2 auf einem Rollenprüfstand 1, wobei das zu prüfende Fahrzeug 2 beispielhaft vierrädrig ausgeführt ist. Beispielhaft ist ein 4x2 Rollenprüfstand 1 dargestellt bei welchem die vier Räder des zu prüfenden Fahrzeugs 2, zwei voneinander unabhängigen Rollen zugeordnet werden. Dabei befinden sich die beiden Vorderräder des zu prüfenden Fahrzeuges 2 auf einer gemeinsamen Rolle 4 (es könnte sich in solchen Fällen natürlich auch um zwei Rollen auf einer gemeinsamen Achse handeln) und beide Hinterräder des zu prüfenden Fahrzeuges 2 auf einer gemeinsamen Rolle 3. Auch die Nutzung eines Rollenprüfstands 1, welcher als 2x1 Rollenprüfstand ausgeführt ist und bei welchem lediglich eine Rolle 3, welche üblicherweise den Antriebsrädern des zu prüfenden Fahrzeuges 2 zugeordnet ist, ist denkbar. Ebenso die Nutzung auf einem 4x4 Prüfstand, bei welchem jedem Rad eines vierrädrigen zu prüfenden Fahrzeuges 2 eine separate Rolle zugewiesen ist. Wie bereits erwähnt ist das Verfahren nicht auf die Anwendung auf Rollenprüfstände für vierrädrige zu prüfende Fahrzeuge 2 beschränkt.

Das zu prüfenden Fahrzeug 2 wird auf dem Rollenprüfstand 1 in Geradeausfahrt betrieben. Unter Geradeausfahrt ist dabei zu verstehen, dass alle Räder des zu prüfenden Fahrzeuges 2 gleiche Drehzahl aufweisen, so wie es bei der üblichen Geradeausfahrt, bei optimaler Haftung aller Räder, vorausgesetzt werden kann.

Wie in Figur 1 erkennbar ist, ist der Rollenprüfstand 1 mit einem Umgebungsmodell 5 und einem zusätzlichen Widerstandsmodell 6 verbunden.

Das Umgebungsmodell 5 enthält die Information über den, im Zuge der Überprüfung des zu prüfenden Fahrzeuges 2, zu fahrenden, simulierten Streckenverlaufs inklusive Kurven (auf weitere Streckendaten die das Modell verarbeitet, wie beispielsweise Steigungen soll hier nicht näher eingegangen werden).

Das Umgebungsmodell 5 erhält vom Rollenprüfstand 2 die an den Rädern des zu prüfenden Fahrzeuges 2 gemessene, aktuelle Geschwindigkeit 7, welche in die zurückgelegte Strecke umgerechnet wird. Anhand der zurückgelegten Strecke kann bestimmt werden an welcher Stelle des simulierten Streckenverlaufs sich das zu prüfende Fahrzeug 2 derzeit befindet. Beim Durchfahren einer Kurve wird der aktuelle Kurvenradius 8 an das an Widerstandsmodell 6 weitergeleitet.

Im Widerstandsmodell 6 werden die bei Kurvenfahrt zusätzlich auftretenden Widerstandskräfte bestimmt die das zu prüfende Fahrzeug 2 auf dem, durch das Umgebungsmodell 5 vorgegebenen, aktuellen Streckenabschnitt erfahren würde. Diese zusätzlich auftretenden Widerstandskräfte werden zu einem Wert zusammengefasst und in weiterer Folge in Form einer Korrekturgröße 9 an den Rollenprüfstand 1 übermittelt.

Im in Figur 1 dargestellten Schema stellt eine Summenwiderstandskraft 10, welche sich aus der Summierung der Widerstandskräfte ergibt, die Korrekturgröße 9 dar. Da die Summenwiderstandskraft 10 naturgemäß geschwindigkeitsabhängig ist, wird auch die aktuelle Geschwindigkeit 7 an das Widerstandsmodell 6 übermittelt. Die Summenwiderstandskraft 10 wird in Form einer Korrekturgröße 9 an den Rollenprüfstand 1 übermittelt.

Wird die Korrekturgröße 9 also durch die Summenwiderstandskraft 10 gebildet, wird in weiterer Folge der Widerstand, den die Rollen 3 und 4 des Rollenprüfstands 1 dem zu prüfenden Fahrzeug 2 entgegensetzen, abhängig von den gefahrenen Kurven angepasst.

Im Widerstandsmodell 6 sind jene Widerstandskräfte, welche bei der Geradeausfahrt wirken, nicht enthalten. Dadurch, dass die Korrekturgröße 9 lediglich die Summenwiderstandskraft 10 berücksichtigt, welche wiederum nur die bei Kurvenfahrt zusätzlich auftretenden Widerstandskräfte vereint, stellt das vorgestellte Verfahren eine Erweiterung oder auch Vereinfachung für die auf Rollenprüfständen üblich angewandten Verfahren dar.

Ein solches, erweiterbares, übliches Verfahren beinhaltet beispielsweise folgenden Ansatz:

$$F = F_0 + F_1 * v + F_2 * v^n + R_w * \frac{\Delta v}{\Delta t} + R_w * g * sin\alpha$$

wobei gilt:

| | |
|---|---|
| F | Zugkraft |
| $F_0$ | Geschwindigkeitsunabhängiger Anteil der Zugkraft |
| $F_1$ | Koeffizient für den linear geschwindigkeitsabhängigen Anteil der Zugkraft |
| $F_2$ | Koeffizient für den nicht-linear geschwindigkeitsabhängigen Anteil der Zugkraft |
| V | Fahrzeuggeschwindigkeit |
| n | Variabler Exponent |

4

| $R_W$ | Fahrzeugreferenzgewicht |
|---|---|
| $R_G$ | Grundträgheit des Rollenprüfstands |
| $R_{W*}=R_W-R_G$ | Elektrisch simulierte Massenträgheit |
| $\Delta v/\Delta t$ | Beschleunigung |
| G | Erdbeschleunigung |
| $R_W*g*\sin\alpha$ | Anteil der Zugkraft zur Überwindung der Straßenneigung |

Wie zu erkennen ist, finden darin bei Kurvenfahrt zusätzlich auftretenden Widerstandskräfte keine Beachtung.

Die Ermittlung der im Widerstandsmodell 6 genutzten Daten zur Bestimmung der Korrekturgröße 9 kann auf zwei Arten erfolgen.

Figur 2 zeigt hierzu ein Kennfeld 12 aus welchem beispielsweise die Summenwiderstandskraft 10 in Abhängigkeit der aktuellen Geschwindigkeit 7 und dem Kurvenradius R zu bestimmen ist. Dieses Kennfeld wird durch unterschiedliche, kurvenradiusabhängige Ausrollkurven 11 gebildet. Die Ausrollkurven 11 des zu prüfenden Fahrzeuges 2 werden dabei durch reale Ausrollversuche, beispielsweise auf einer Teststrecke ermittelt. Die Ausrollversuche umfassen dabei mehrere Durchgänge bei welchen das zu prüfende Fahrzeug 2 Kurven mit unterschiedlichen Kurvenradien durchrollt. Unter Ausrollkurve 5 wird dabei der Zusammenhang zwischen Geschwindigkeit des zu prüfenden Fahrzeuges 2, Radius der durchrollten Kurve und der sich ergebenden Widerstandskraft an den Rädern des zu prüfenden Fahrzeuges 2 verstanden.

Eine weitere Möglichkeit besteht darin die Summenwiderstandskraft 10 mithilfe physikalischer Modelle zu berechnen.

Dazu kann beispielsweise die Formel für den Kurvenwiderstand des linearen Einspurmodells nach: "Karl Ludwig Haken, "Grundlagen der Kraftfahrzeugtechnik", Carl Hanser Verlag, München, 2008" genutzt werden:

$$F_{Kurvenwiderstand} = \frac{\left(m_{Ges} * \frac{l_h}{l}\right)^2 * v^4}{R_h{}^2 * 2 * C_{Sh}} + \frac{\left(m_{Ges} * \frac{l_v}{l}\right)^2 * v^4}{R_h{}^2 * 2 * C_{Sv}}$$

wobei gilt:

| $m_{Ges}$ | Fahrzeugmasse (inklusive Auftrieb/Abtrieb) |
|---|---|
| l | Radstand |
| $l_h, l_v$ | Schwerpunktsabstand Hinterachse/Vorderachse |
| v | Fahrzeuggeschwindigkeit |
| $R_h, R_v$ | Kurvenradius hinten/vorne |
| $C_{Sh}, C_{Sv}$ | Schräglaufsteifigkeit hinten/vorne |

Weiters gilt für die Fahrzeugmasse:

$$m_{Ges} = \frac{F_m + F_a}{g} = m + \frac{F_a}{g}$$

wobei gilt:

| m | Fahrzeugmasse |
|---|---|
| $F_m$ | Fahrzeuggewichtskraft |
| $F_a$ | Auftriebskraft |

wobei für die Auftriebskraft gilt:

$$F_a = c_a * A * \rho * \frac{v^2}{2}$$

| $C_a$ | Auftriebsbeiwert |
|---|---|
| A | Bezugsfläche |
| $\rho$ | Luftdichte |

Neben diesem einfachen, physikalischen Modell sind natürlich auch komplexere Modelle, welche die Berücksichtigung von Widerstandskräften hervorgerufen durch die auf die Reifen und das Fahrwerk des zu prüfenden Fahrzeuges wirkenden Kräfte, durch Verluste im Antriebsstrang und/oder durch lenkungsabhängige Nebenaggregate beinhalten denkbar.

Figur 3 zeigt ein Schema bei welchem die Korrekturgröße 9 genutzt wird um direkt die Messgröße 13 zu korrigieren. Die Korrekturgröße 9 muss nicht zwangsläufig, wie bereits beschrieben, durch die Summenwiderstandskraft 10 gebildet werden. Grundsätzlich kann auch, je nach am Rollenprüfstand 1 zu bestimmenden Messwert, die Korrekturgröße 9 direkt auf diesen angewendet werden. Beispielhaft könnte dabei der Treibstoffverbrauch des zu prüfenden Fahrzeuges 2 eine zu ermittelnde Messgröße 13 darstellen. Das bei Figur 2 beschriebene Kennfeld 12 wird in diesem Fall dahingehend abgeändert, dass nicht die Summenwiderstandskraft 10 sondern der Treibstoffverbrauch des zu prüfenden Fahrzeuges 2 in Abhängigkeit von Geschwindigkeit 7 und Kurvenradius R bestimmt wird.

Wird das Messergebnis des Rollenprüfstands 1 ausgewertet, kann die Korrekturgröße 9 direkt auf die ermittelte Messgröße 13 angewendet, und diese somit, abhängig von den gefahrenen Kurven, korrigiert werden.

## Patentansprüche

1. Verfahren zur Simulation von Kurvenfahrten eines, zur Ermittlung einer Messgröße (13), zu prüfenden Fahrzeuges (2) auf einem Rollenprüfstand (1), **dadurch gekennzeichnet, dass** das zu prüfende Fahrzeug (2) am Rollenprüfstand (1) entsprechend einer Geradeausfahrt betrieben wird und dass zur Simulation von Kurvenfahrten die dabei zusätzlich wirkenden Widerstandskräfte in Form einer Korrekturgröße (9) berücksichtigt werden.

2. Verfahren nach Anspruch 1, **dadurch gekennzeichnet, dass** als Korrekturgröße (9) eine Summenwiderstandskraft (10) verwendet wird, welche durch summieren der bei Kurvenfahrt zusätzlich wirkenden Widerstandskräfte gebildet wird und welche am Rollenprüfstand (1) in Form eines veränderten Widerstands, welchen der Rollenprüfstand (1) auf das zu prüfende Fahrzeug (2) ausübt, berücksichtigt wird.

3. Verfahren nach Anspruch 1, **dadurch gekennzeichnet, dass** als Korrekturgröße (9) ein rechnerischer Korrekturfaktor verwendet wird, mittels welchen die ermittelte Messgröße (13) korrigiert wird.

4. Verfahren nach Anspruch 2 oder 3, **dadurch gekennzeichnet, dass** ein, die Korrekturgröße (9) beschreibendes Kennfeld (12) durch reale Ausrollversuche des zu prüfenden Fahrzeuges (2) in Kurven mit unterschiedlichen Radien (R) erstellt wird.

5. Verfahren nach Anspruch 2 oder 3, **dadurch gekennzeichnet, dass** die Korrekturgröße unter Verwendung physikalischer Modelle berechnet wird.

6. Verfahren nach Anspruch 5, **dadurch gekennzeichnet, dass** durch ein physikalisches Modell Widerstandskräfte hervorgerufen durch die auf die Reifen und das Fahrwerk des zu prüfenden Fahrzeuges (2) wirkenden Kräfte berücksichtigt werden.

7. Verfahren nach Anspruch 5 oder 6, **dadurch gekennzeichnet, dass** durch ein physikalisches Modell Widerstandskräfte hervorgerufen durch Verluste im Antriebsstrang des zu prüfenden Fahrzeuges (2) berücksichtigt werden.

8. Verfahren nach zumindest einem der Ansprüche 5 bis 7, **dadurch gekennzeichnet, dass** durch ein physikalisches Modell Widerstandskräfte welche durch lenkungsabhängige Nebenaggregate des zu prüfenden Fahrzeuges (2) hervorgerufen werden berücksichtigt werden.

## Claims

1. A method for simulating cornering of a vehicle (2) being tested on a roller dynamometer (1) to determine a measured variable (13), **characterized in that** the vehicle (2) being tested on the roller dynamometer (1) is operated as though driving straight ahead, and to simulate cornering the additional resistance forces of cornering are taken into account in the form of a correction parameter (9).

2. The method according to claim 1, **characterized in that** a cumulative resistance force (10) is used as the correction parameter (9), formed by adding the resistance forces which additionally occur during cornering, said cumulative resistance force (10) being taken into account on the roller dynamometer (1) in the form of a modified resistance which the roller dynamometer (1) exerts on the vehicle (2) being tested.

3. The method according to claim 1, **characterized in that** a mathematical correction factor is used as the correction parameter (9), wherein the measured variable (13) is corrected by means of the same.

4. The method according to claim 2 or 3, **characterized in that** a characteristic map (12) which describes the correction parameter (9) is compiled by real coast down experiments of the vehicle (2) being tested, in curves with different radii (R).

5. The method according to claim 2 or 3, **characterized in that** the correction parameter is calculated using physical models.

6. The method according to claim 5, **characterized in that** a physical model is used to take into account the resistance forces created by the forces acting on the tires and the chassis of the vehicle (2) being tested.

7. The method according to claim 5 or 6, **characterized in that** a physical model is used to take into account the resistance forces created by losses in the drive train of the vehicle (2) being tested.

8. The method according to at least one of the claims 5 to 7, **characterized in that** a physical model is used to take into account resistance forces which are created by auxiliary units of the vehicle (2) being tested which are dependent on the steering.

**Revendications**

1. Procédé de simulation de conduites en virage d'un véhicule (2), à tester pour déterminer une grandeur de mesure (13), sur un banc d'essai à rouleaux, **caractérisé en ce que** le véhicule (2) à tester fonctionne sur le banc d'essai à rouleaux (1) conformément à une conduite en ligne droite, et **en ce que**, pour la simulation de conduites en virage, les forces de résistance agissant ainsi en plus sont prises en compte sous la forme d'une grandeur de correction (9).

2. Procédé selon la revendication 1, **caractérisé en ce qu'**on utilise en tant que grandeur de correction (9) une force de résistance totale (10), laquelle est obtenue par sommation des forces de résistance agissant en plus lors de la conduite en virage, et laquelle est prise en compte sur le banc d'essai à rouleaux (1) sous la forme d'une résistance modifiée que le banc d'essai à rouleaux (1) exerce sur le véhicule (2) à tester.

3. Procédé selon la revendication 1, **caractérisé en ce qu'**on utilise en tant que grandeur de correction (9) un facteur de correction calculé au moyen duquel la grandeur de mesure (13) déterminée est corrigée.

4. Procédé selon la revendication 2 ou 3, **caractérisé en ce qu'**un diagramme caractéristique (12) décrivant la grandeur de correction (9) est produit au moyen d'essais réels de marche en roue libre du véhicule (2) à tester dans des virages de rayons (R) différents.

5. Procédé selon la revendication 2 ou 3, **caractérisé en ce que** la grandeur de correction est calculée en utilisant des modèles physiques.

6. Procédé selon la revendication 5, **caractérisé en ce qu'**au moyen d'un modèle physique, des forces de résistance provoquées par les forces agissant sur les pneus et le train roulant du véhicule (2) à tester sont prises en compte.

7. Procédé selon la revendication 5 ou 6, **caractérisé en ce qu'**au moyen d'un modèle physique, des forces de résistance provoquées par des pertes dans la chaîne cinématique du véhicule (2) à tester sont prises en compte.

8. Procédé selon au moins l'une des revendications 5 à 7, **caractérisé en ce qu'**au moyen d'un modèle physique, des forces de résistance qui sont provoquées par des groupes auxiliaires, dépendant de la direction, du véhicule (2) à tester sont prises en compte.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130060500 A1

**In der Beschreibung aufgeführte Nicht-Patentliteratur**

- SAE International: Chassis Dynamometre Simulation of Roads Load Using Coastdown Techniques. *Recomendet Practice,* 1995
- Realer Kraftstoffverbrauch und manöverbasiertes Testen. *ATZ-Automobiltechnische Zeitschrift,* April 2013, 290-295
- Rollenprüfstände für Fahrzeuge und Antriebskonzepte von morgen. *ATZ,* April 2012
- **KARL LUDWIG HAKEN.** Grundlagen der Kraftfahrzeugtechnik. Carl Hanser Verlag, 2008